(19) Europäisches Patentamt
European Patent Office
Office européen des brevets

(11) Publication number : 0 274 442 B1

# (12) EUROPEAN PATENT SPECIFICATION

(45) Date of publication of patent specification : **16.10.91 Bulletin 91/42**

(51) Int. Cl.$^5$ : **B62K 21/12,** B62K 21/26, B62L 3/02

(21) Application number : **88300112.5**

(22) Date of filing : **08.01.88**

## (54) Bicycle and handlebar system.

(30) Priority : **09.01.87 US 1616**

(43) Date of publication of application : **13.07.88 Bulletin 88/28**

(45) Publication of the grant of the patent : **16.10.91 Bulletin 91/42**

(84) Designated Contracting States : **DE FR GB IT**

(56) References cited :
**AU-B- 82 284**
**FR-A- 794 122**
**FR-A- 1 539 632**
**US-A- 4 474 386**

(73) Proprietor : **Lennon, Dan Cochran**
**Box 1858**
**Bozeman, Montana 59771 (US)**

(72) Inventor : **Lennon, Dan Cochran**
**Box 1858**
**Bozeman, Montana 59771 (US)**

(74) Representative : **Gordon, Michael Vincent et al**
**GILL JENNINGS & EVERY 53-64 Chancery Lane**
**London WC2A 1HN (GB)**

EP 0 274 442 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to bicycle handlebars which are adapted to improve the performance and stamina of the rider.

The design of racing bicycles, or other special-purpose bicycles, is especially complex. Structural changes which may at first seem minor to the unskilled can provide significant improvement in bicycle performance. This improved performance can provide recognisable advantage to the bicycle rider.

To perform well in bicycle race competition — especially a competition of extended duration or length — a minimised frontal area and shape should be presented by the combination of the bicycle and the bicycle rider. Frontal area minimisation is not enough, however; the position of the bicycle rider must be comfortable so that the rider can produce requisite high levels of effort and performance for long periods of time.

Frontal areas and rider positions are greatly affected by the position, shape, and arrangement of the bicycle handlebar. Simply as an example, a bicycle having handlebar grips located in a relatively raised position will encourage a rider to assume a relatively upright riding position. While this position may be comfortable, a large frontal area is presented, and the relatively large ensuing wind resistance minimises top speed even though the rider may be producing a large amount of pedalling effort. Conversely, a bicycle having a relatively low-set handlebar encourages the rider to assume a position in which the frontal area is minimised. Small frontal area results in higher top speed with less rider effort. But in prior racing bicycles, the rider is fatigued over time due to the crouched position and is not able to sustain endurance through a long race.

It is an object of the present invention to provide a bicycle handlebar, and an adaptor kit comprising handlebar extension means for attachment to an original handlebar, for encouraging the bicycle rider to assume an efficient, yet comfortable, riding position which can be sustained over long periods of time.

FR-A-1539632 discloses a bicycle handlebar comprising a crosspiece having a central portion connectable to a steering post located forwardly of a bicycle seat, the crosspiece also have side portions which extend to first portions capable of use as a first pair of handles (extending rearwardly) and extend towards forwardly projecting second portions capable of use as a second pair of handles (located above brake levers), the present invention being characterised in that the forwardly projecting second portions of the bicycle handlebar are located in positions such that, when grasped by a rider's hands, the rider's forearms are capable of being supported by the side portions of the crosspiece.

Different independent claims protect different particularly preferred bicycle handlebars.

Moreover, FR-A-794122 discloses an adaptor kit comprising handlebar extension means (extending upwardly and rearwardly) for attachment to an original handlebar which is connected to a steering post, the present invention being characterised in that the handlebar extension means of the adaptor kit includes a pair of clamps for engaging the original handlebar on opposite sides of the steering post, with an extension element projecting forwardly from each clamp and away from the rider, and each extension element having a hand portion located to define a rider position in which the rider's elbows are located near the original handlebar with the rider's arms extending forwardly towards the hand portions.

The present invention will now be described in greater detail with reference to the accompanying drawings in which:

Fig. 1 is a side elevational view of a bicycle including a handlebar according to the present invention;

Fig. 2 is a developed fragmentary view taken from a position above and forward of the bicycle as shown by line 2-2 in Fig. 1;

Fig. 3 is a side elevational view similar to Fig. 1 but showing the bicycle as it appears when a rider is aboard the bicycle in a riding position;

Fig. 4 is a developed fragmentary view taken from a position above and forward of the bicycle and rider as shown by line 4-4 in Fig. 3;

Fig. 5 is a developed fragmentary view of the bicycle handlebar as it appears from a position above the bicycle as suggested by line 5-5 in Fig. 1, portions of the associated bicycle being omitted for clarity;

Fig. 6 is a top plan view of the handlebar tubing and illustrates various shapes, configurations and dimensions utilised in the manufacture of the handlebar from a stock tube;

Fig. 6A is a side elevational view of the handlebar tubing shown in Fig. 6 and shows in further detail the handlebar tubing shapes, configurations and dimensions utilised in the manufacture of the handlebar;

Fig. 7 is a perspective view of an alternative handlebar according to the present invention;

Fig. 7A is a fragmentary view of an add-on handlebar clamp for the handlebar shown in Fig. 7;

Fig. 8 is a front elevational view of a further alternative handlebar according to the present invention;

Fig. 9 is a front elevational view of the handlebar shown in Fig. 8 taken partially from the side;

Fig. 10 is a side elevational view of the handlebar shown in Fig. 8 taken partially from the front; and

Figs. 11A-11T illustrate various views of the handlebar of Fig. 8 during the bending process which is used to manufacture the handlebar.

Turning first to Fig. 1, there is shown a bicycle 10 which includes a triangular-shaped frame 14 comprised of a top tube 24, a down tube 26 and a seat tube 16. Seatstays 15 and chainstays 17 join to rigidly secure a rear wheel 12 by its axle 19. Extending from the seat tube 16 is a seat post 18. Mounted atop the seat post 18 is a saddle 20. Seat post 18 may be raised or lowered into the seat tube to accommodate riders of differing heights. The top tube 24 and down tube 26 extend forwardly to a fork or head tube 28. Journalled within this fork tube 28 is a stem 30 leading to front forks 32. Pedals 38 mounted to cranks 40 operate a drive sprocket 42 and a chain drive 44 in a known manner to propel the bicycle. A front wheel 34 is shown between front forks 32.

As shown in Fig. 2, handlebar 50 includes a crosspiece 52 to which the stem 30 is connected by a stem clamp 51. Stem clamp 51 may be raised or lowered relative to the head tube 28 by adjusting a stem bolt (not shown). Extending from the crosspiece 52 are first handles 54 located and adapted to be grasped in a known manner by a rider. Brake-operating levers 56 extend from brake hoods 55 located upon the first handles 54.

In accordance with the invention, a small-frontal-area yet comfortable riding position is encouraged by providing second handles which extend forwardly of the other portions of the handlebar, as illustrated particularly in Figs. 1-5. The second handles 60 are located so that, when they are grasped by a bicycle rider R, the rider's forearms F are located to be supported by the handlebar 50 at positions over the crosspiece 52. To this end, the handlebar crosspiece 52 can be provided with tapered padding material or other forearm rests 62, if desired. Together, then, the handlebar 50 and the position of the saddle 20 define a riding position in which the frontal area of the rider's silhouette is minimised, as especially suggested in Fig. 3. Furthermore, when the saddle and stem positions are properly adjusted, the rider's back will be substantially straight and horizontal to further reduce wind resistance and to enhance rider comfort.

Moreover, the width W of the rider's silhouette is minimised by positioning the rider's forearms or elbows so as to be relatively close together, as is especially suggested in Fig. 4. To this end, the forearm rests 62 are each located rather closely adjacent the stem clamp 51. In this way, the maximum width W of the silhouette is simply that of the rider's shoulder width ; the arms and elbows do not extend outside this profile. In this position, the rider's arms and elbows do not contribute to increased frontal area and consequently wind drag is reduced. To further reduce wind resistance, the second handles 60 are located relatively close to one another. It has been found useful to locate these handles approximately 10.2 cm (4") or less apart.

The chord length from the crosspiece 52 to the tip of a handle 60 is preferably in the order of 30.5 cm (12"). Under these circumstances, as particularly illustrated in Fig. 3, the rider naturally assumes the position in which the forearms and upper arms are located directly ahead of the torso. Because the rider's arms are located ahead of the lungs, breathing constrictions are minimised or eliminated.

A variety of different rider hand positions are provided. In addition to the positions provided by first handles 54 and second handles 60, the rider may wish to position the hands over the forearm rests 62, adjacent to the stem clamp 51, as is common during climbing. To this end, the forearm rests 62 are preferably cylindrical and have an outside diameter only slightly greater than that of the crosspiece 52. If desired, the brake handles 56 could be located more closely adjacent grips on the second handles 60. Of course, additional brake handle or actuating mechanisms could also be installed adjacent the second handles 60.

As shown in Figs. 6 and 6A, the handlebar 50 can be constructed of a single piece of tubing formed of aluminium or other suitable material. The preferred tubing is 6061-T6 aluminium tubing having an outside diameter of 24.0 mm and an inside diameter of 20.5 mm. To form the handlebar 50, a straight piece of tubing 121.9 cm (48") long is put through a series of eight bending operations. All of the bends have a radius of 7.6 cm (3").

Prior to bending, the midpoint M of the straight tube is identified and marks are placed at distances of 12.7, 25.4 and 38.1 cm (5, 10 and 15") from the midpoint in both directions (points A, B and C in Fig. 6). Then, a 180° bend away from the centre is made on one side of the bar beginning at the 12.7 cm (5") mark A. Next, a 90° bend away from the centre and in the same plane as the first bend is made starting at the 25.4 cm (10") mark B. Following this bend there is made a 15° bend away from the centre, again in the same plane. To complete the bends on this side of the bar, a 30° upward bend is made commencing at the 38.1 cm (15") mark C (see Fig. 6A which is a side view of the tubing shown in Fig. 6). These four bends are then repeated for the other side of the tubing. Lastly, the ends of the bar are cut such that the chord length from the centre of the tube crosspiece to the tube tip (distance L in Fig. 6) is approximately 30.5 cm (12"). This will provide a centre-to-centre tip width (distance T in Fig. 6) of approximately 10.2 cm (4"). Dimensions L and T can, of course, be varied by changing the radius and/or starting points of the bends, but the dimensions given above are preferred for this embodiment of the invention.

Another embodiment of the invention is illustrated in Figs. 7 and 7A. In this embodiment, the advantages mentioned above are provided by an accessory for an existing handlebar. As shown in Fig. 7, stem 30 is connected to conventional racing handlebar 81 at its crosspiece 82 by the stem clamp 51. Also connected to the crosspiece are add-on handles 80 which extend in a substantially horizontal plane away from the stem, i.e. away from the bicycle rider. The add-on handles 80 each includes a clamp element 84 and an extension element 86 and may also include grips 88 on the ends thereof.

A suitable clamp element, as shown in more detail in Fig. 7A, may consist of an upper portion 92 and a lower portion 94 which can be separated from upper portion 92. Upper portion 92 is threaded in at least two places on either side of a semi-cylindrical opening 96 in order to receive bolts 98. Located between the bolts 98 in the lower portion 94 is a second semi-cylindrical opening 97 which aligns with semi-cylindrical opening 96. The cylindrical opening formed by adjoining the two semi-cylindrical openings is adapted to securely grip the crosspiece 82 when the bolts are tightened. A clamp, such as that shown in Fig. 7A, is preferable to, for example, a standard stem clamp since it allows the add-on handles 80 to be secured to the existing handlebar 81 without removing brake hoods 55.

While the add-on handles could extend outwardly from the crosspiece 82 at an angle exactly equal to 90°, it has been found more advantageous from both aerodynamic and comfort viewpoints to angle the bars inwardly towards one another such that the angle Ø in Fig. 7 is equal to 75°. In addition, it is preferable to raise up the free end of each bar 45° on a radial bend of 7.6 cm (3"). Thus, the end of each bar would appear as shown in Fig. 6A except that the 30° angle would be instead 45°. With such a 45° upward turn, the chord length from the free end of an addon handle to the centre of the existing handlebar (dimension C in Fig. 7) should be in the range of 22.9 to 35.6 cm (9 to 14"), with 27.9 cm (11") for short model addon handles and 30.5 cm (12") for long model add-on handles being preferred. It is also desirable to space the clamps 84 so that the distance from the inside edge of one clamp to the inside edge of the second clamp (distance S in Fig. 7) is 12.06 cm (4.75"). Such a spacing will provide a centre-to-centre tip width (distance T in Fig. 7) of 8.25 cm (3.25"). Such a tip width distance provides reduced wind resistance yet allows the rider to have effective steering control.

To increase rider comfort, forearm rest pads 90 are affixed to the crosspiece 82 on the outside of the clamps 84. As with the forearm rests 62 described above, the forearm rests 90 can be grasped by the rider so that the rider can steer the bicycle while in a climbing position, i.e. while the hands are on the crosspiece of the conventional handlebar. Forearm rest 90 is preferably comprised of a cylindrically-shaped foam piece which has been split so that it can be placed upon the crosspiece 82 without requiring removal of the brake hoods 55.

Figs. 8-10 illustrate a third embodiment of the handlebar of the present invention. This handlebar again provides a riding position in which the rider's arms extend forwards over the crosspiece. Yet the handlebar also provides the rider with sprinting or "on-the-drops" hand positions similar to those provided by a conventional racing handlebar. The forwardly extending and sprinting positions, as well as various other positions, are provided by handlebar 100. The handlebar 100 includes a crosspiece 102 to which the stem 30 is connected by stem clamp 51. Extending outwardly and downwardly from the crosspiece 102 are first handles 104 which include the sprinting portions. The handlebar then extends upwardly and inwardly to provide secondary handles 106. The handles 106 are located so that, when they are grasped by the rider, the rider's forearms are located to be supported by the handlebar 100 at positions over the crosspiece 102. The handlebar is further arranged such that the rider's hands are positioned closer and closer together as they approach the ends 108 of the secondary handles 106. Inwardly tapered forearm rests 110 are positioned over the crosspiece 102 to increase the rider's comfort when using the secondary handles. Forearm rests 110 are again configured such that the rider can grasp over them to steer the bicycle in a climbing position.

The handlebar 100 is preferably formed from a single piece of 6061-T6 aluminium tubing which is at least 137.2 cm (54") long. Prior to the bending operations, the centre point of the tube is identified and distances of 8.25, 19.05, 41.27, 46.99 and 58.42 cm (3.25, 7.5, 16.25, 18.5 and 23") from the centre point in both directions are marked off.

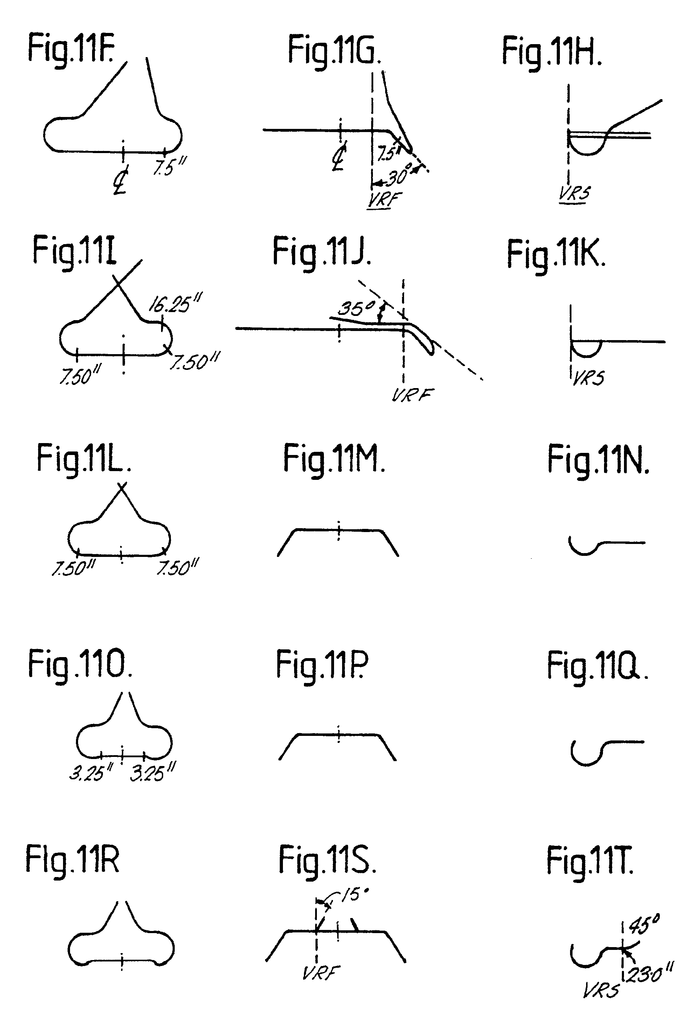

Fig. 11A illustrates the reference planes in which the bends described below are made. Plane HR is the horizontal reference plane ; plane VRS is the vertical reference plane extending from side-to-side ; and VRF is the vertical reference plane extending from front-to-back. The references made below to the right and left sides of the tubing are as seen from the rider's viewpoint, from the back of the bicycle looking forward. It should be noted that Figs. 11B-11T, which illustrate the tubing bending steps, are not drawn to scale. All bends have a 6.35 cm (2.5") radius.

Referring first to Fig. 11B, which is a top view i.e. a view looking down on the horizontal reference plane HR, a 180° bend away from the centre is made on the right side of the tube beginning at the 19.05 cm (7.5") mark. Next, a 60° bend is made on the right side of the tube beginning at the 46.99 cm (18.5") mark (see Fig. 11C). Referring to Fig. 11D, a third bend of 60° is made on the left side of the tube commencing at the 46.99 cm (18.5") mark. Next, a 180° bend is made on the left side of the tube commencing at the 19.05 cm (7.5") mark (see Fig. 11E). All of the bends up to this point have been made in the horizontal reference plane only.

Figs. 11F-11H illustrate the first bend made in the vertical reference plane from front-to-rear (VRF). This bend is a 60° bend made toward the centre on the right side of the tube commencing at the 19.05 cm (7.5") mark. It is important that this bend is maintained in the VRS plane 0° (see Fig. 11H). Next, a second VRF bend is made on the right side of the tube beginning at the 41.27 cm (16.25") mark. This bend is a 35° bend in relation to this section's existing plane (see Fig. 11J). In the VRS plane, the tube is made parallel to the stem bar, i.e. 0° in this plane (see Fig. 11K). The 60° and 35° VRF plane bends just made on the right side of the tubing are then repeated on the left side (see Figs. 11L-11N).

The next two bends are again made in the horizontal reference plane (HR). Both bends, one on the left side and one on the right side, are 10° and made toward the rear of the bicycle and commence at the 8.25 cm (3.25") mark (see Fig. 110). The next two bends are both started from the 58.42 cm (23") mark. First a 45° upward bend (VRS) is made (see Fig. 11T). Then a 15° inward bend (VRF) is made (see Fig. 11S). These two bends are then repeated for the other side of the tube to complete the bending operations. Lastly, the ends of the tube are cut so that the chord length from the centre of the crosspiece 102 to the closest edge of the bar end 108 (dimension C in Fig. 8) is 27.9 cm (11"). With such a chord length, the centre-to-centre tip width (distance T in Fig. 8) is 8.25 cm (3.25").

Variations in the bending starting points and angles can, of course, be made to suit individual bicycle riders' preferences. In particular, it has been found that tall riders prefer a handlebar in which dimension C in Fig. 6 is 30.5 cm (12") rather than 27.9 cm (11"). Even in the longer handlebars, an 8.25 cm (3.25") centre-to-centre tip width is desired for maximum rider comfort and steering control.

## Claims

1. A bicycle handlebar (50 ; 100) comprising :

a crosspiece (52 ; 102) having a central portion connectable to a steering post (30) located forwardly of a bicycle seat (20), the crosspiece also having side portions which extend to turned portions capable of use as a first pair of handles (54; 104) and extend towards forward portions capable of use as a second pair of handles (60 ; 106); characterised in that the turned handle portions (54 ; 104) include forwardly turned bends which extend forwardly while converging inwardly, and the forward handle portions (60 ; 106) extend from the forwardly turned and inwardly converging bends such that a plurality of rider positions are defined, one of which being the rider's forearms (F) converging inwardly from the rider's shoulders and resting relatively close together on the sidewardly extending portions of the crosspiece (52 ; 102) with the rider's hands being relatively close together while gripping the pair of forward handle portions.

2. A bicycle handlebar according to claim 1, characterised in that the turned handle portions (104) include downwardly inclined bends extending below the crosspiece (102) followed by upwardly inclined bends which extend into the forwardly and inwardly turned bends to define additional rider positions.

3. A bicycle handlebar according to claim 1 or claim 2, characterised in that a pair of pads extend circumferentially around the sidewardly extending portions to form a pair of forearm rests (62 ; 110).

4. A bicycle handlebar according to claim 3, characterised in that each of the pads has an enlarged section which tapers inwardly to a smaller section with each of the smaller sections being located closely adjacent the central portion of the crosspiece (52 ; 102) connectable to the steering post.

5. A bicycle handlebar according to any preceding claim, characterised in that the forward handle portions (60 ; 106) are spaced apart at their closest distance (T) by a centre-to-centre separation width of approximately 10.2 cm (4") or less.

6. A bicycle handlebar according to any preceding claim, characterised in that the forward handle portions (60; 106) are located forwardly of the crosspiece (52 ; 102) at their forward ends by a distance (L ; C) of approximately 30.5 cm (12") or less.

7. A bicycle handlebar according to any preceding claim, characterised in that a pair of hand brake mechanisms (55) are located on the turned handle portions (54 ; 104) and have brake levers (56) extending adjacent the bends.

8. A bicycle handlebar according to any preceding claim, characterised in that the forward handle portions (60 ; 106) are also upwardly inclined to define both inwardly and upwardly converging hand grips.

9. A bicycle handlebar according to any preceding claim, characterised in that a single continuous piece of tubing forms the handlebar (50 ; 100) with the free ends of the tubing forming the forward handle portions.

10. A bicycle handlebar (50 ; 100) comprising :

a crosspiece (52 ; 102) having a central portion connectable to a steering post (30) located forwardly of a bicycle seat (20), the crosspiece also having opposite portions which extend to turned portions (54 ; 104) and towards forward handle portions (60 ; 106) spaced apart a distance less than the width of the crosspiece (52 ; 102) ; characterised in that the turned portions (54 ; 104) extend generally forwardly and inwardly to the forward handle portions (60 ; 106), with a pair of inwardly tapered pads (62 ; 110) being secured to the opposite portions of the crosspiece (52 ; 102) and being tapered to urge a rider's forearms (F) inwardly when the rider's hands extend forwardly to grip the forward handle portions.

11. A bicycle handlebar according to claim 10, characterised in that the pair of pads are configured to allow the rider to grasp over them so as to form additional hand positions for the rider.

12. A bicycle handlebar according to claim 10 or claim 11, characterised in that the pair of pads are closely adjacent the central portion of the crosspiece (52 ; 102) to define a rider position in which the rider's elbows are spaced apart a distance less than the rider's shoulder width when the rider's forearms are resting on the pair of pads.

13. A bicycle handlebar according to claim 12, characterised in that the forward handle portions converge inwardly and are spaced relatively close together to allow the rider's arms when resting on the pair of pads to extend relatively straight forward towards the forward handle portions.

14. A bicycle handlebar according to any one of claims 10 to 13, characterised in that each of the turned portions (104) includes a downwardly inclined bend followed by an upwardly inclined bend followed by forward and inwardly turned bends which extend into the forward handle portions (106, the downwardly inclined and upwardly inclined bends being located below the plane of the crosspiece (102) and forming additional hand positions for the rider.

15. An adaptor kit (80) comprising :

handlebar extension means (84, 86, 88) for attachment to an original handlebar (81) which is connected to a steering post (30) ;

characterised in that the handlebar extension means includes a pair of clamps (84) for engaging the original handlebar (81) on opposite sides of the steering post (30), with an extension element (86) projecting forwardly from each clamp and away from the rider, and each extension element (86) having a hand portion (88) located to define a rider position in which the rider's elbows are located near the original handlebar (81) with the rider's arms extending forwardly towards the hand portions (88).

16. An adaptor kit according to claim 15, characterised in that the extension elements (86) are elongate and the length (C) from the ends of the hand portions (88) to the centre of the original handlebar (81) is in the range of 22.9 to 35.6 cm (9 to 14").

17. An adaptor kit according to claim 15 or claim 16, characterised in that each of the hand portions (88) angles inwardly towards the other.

18. An adaptor kit according to claim 17, characterised in that each of the hand portions (88) angles upwardly as well as inwardly.

19. An adaptor kit according to any one of claims 15 to 18, characterised in that a pair of rest pads (90) is provided for mounting to the original handlebar on each side of and adjacent the steering post for supporting the rider's forearms.

20. An adaptor kit according to claim 19, characterised in that each of the rest pads (90) has a generally cylindrical shape with a split so that it can be mounted to the original handlebar without requiring removal of anything on the original handlebar.

21. An adaptor kit according to any one of claims 15 to 20, characterised in that the extension elements (86) project forwards from their clamps (84) towards free ends, the extension elements (86) each including an upward incline at the free ends thereof with hand grips (88) being mounted on said upward incline.

22. A bicycle handlebar (50 ; 81 ; 100) comprising a crosspiece (52 ; 82 ; 102) having a central portion connectable to a steering post (30) located forwardly of a bicycle seat (20), the crosspiece also having side portions which extend to first portions capable of use as a first pair of handles (54 ; 104) and extend towards forwardly projecting second portions capable of use as a second pair of handles (60 ; 80 ; 106), characterised in that the forwardly projecting second portions are located in positions such that, when grasped by a rider's hands, the rider's forearms (F) are capable of being supported by the side portions of the crosspiece (52 ; 82 ; 102).

**Patentansprüche**

1. Fahrradlenker (50, 100) mit einem Querträger (52, 102), der ein zentrales mit einer Lenksäule (30) verbindbares Teil besitzt, die vor einem Fahrradsitz (20) angeordnet ist, wobei der Querträger außerdem Seitenteile besitzt, die sich in gewundene Teile erstrecken, die zur Verwendung als ein erstes Paar von Handgriffen (54, 104) geeignet sind, und der sich nach vorne in vordere Teile erstreckt, die zur Verwendung als ein zweites Paar Handgriffe (60, 106) geeignet sind, **dadurch gekennzeichnet**, daß die gewundenen Handgriffstücke (54, 104) nach vorne gewundene Bögen beinhalten, die sich nach vorne erstrecken, während sie nach innen konvergieren, und die vorderen Griffstücke (60, 106) sich derart von den nach vorne gewundenen und nach innen konvergierenden Bögen erstrecken, daß eine Vielzahl von Fahrerpositionen gebildet ist, von denen bei einer, die Unterarme (F) des Fahrers von den Schultern des Fahrers aus nach innen konvergieren und relativ dicht aneinander auf den sich seitlich erstreckenden Teilen des Querträgers (52, 102) ruhen, wobei die Hände des Fahrers relativ dicht aneinanderliegen, während er das vordere Griffstückpaar umgreift.

2. Fahrradlenker nach Anspruch 1, **dadurch gekennzeichnet**, daß die gewundenen Handgriffstücke (104) nach unten geneigte Bögen aufweisen, die sich unterhalb des Querträgers (102) erstrecken, gefolgt von aufwärts geneigten Bögen, die sich in die nach vorne und nach innen gedrehten Bögen erstrecken, um zusätzliche Fahrerpositionen zu ergeben.

3. Fahrradlenker nach Anspruch 1 oder 2, **dadurch gekennzeichnet**, daß ein Polsterpaar sich umfangsmäßig um die sich seitwärts erstreckenden Abschnitte erstrecken, um ein Paar Unterarmstützen (62, 110) zu bilden.

4. Fahrradlenker nach Anspruch 3, **dadurch gekennzeichnet**, daß jedes der Polster einen vergrößerten Bereich besitzt, der sich nach innen zu einem kleineren Bereich hin verjüngt, wobei jeder der kleineren Bereiche dicht anliegend an dem zentralen Bereich des Querträgers (52, 102), der mit der Längssäule verbindbar ist, angeordnet ist.

5. Fahrradlenker nach einem der vorstehenden Ansprüche, **dadurch gekennzeichnet**, daß die vorderen Griffstücke (60, 106) an der Stelle ihres geringsten Abstandes (T) durch eine Mittelpunkt- zu Mittelpunkt- Abstandsbreite von ungefähr 10,2 cm (4 inches) oder weniger voneinander getrennt sind.

6. Fahrradlenker nach einem der vorstehenden Ansprüche, **dadurch gekennzeichnet**, daß die vorderen Handgriffstücke (60, 106) vor dem Querträger (52, 102) an ihren vorderen Enden mit einem bestand (L, C) von ungefähr 30,5 cm (12 inches) oder weniger angeordnet sind.

7. Fahrradlenker nach einem der vorstehenden Ansprüche, **dadurch gekennzeichnet**, daß ein Handbremseinrichtungspaar (55) auf den gewundenen Griffstücken (54, 104) angeordnet ist, die Bremshebel (56) besitzt, die sich nahe der Bögen erstrecken.

8. Fahrradlenker nach einem der vorstehenden Ansprüche, **dadurch gekennzeichnet**, daß die nach vorne gerichteten Griffstücke (60, 106) auch nach oben geneigt sind, um sowohl nach innen als auch nach oben konvergierende Handgriffe zu bilden.

9. Fahrradlenker nach einem der vorstehenden Ansprüche, **dadurch gekennzeichnet**, daß ein einziges kontinuierlich verlaufendes Rohrstück den Lenker (50, 100) bildet, wobei die freien Enden des Rohres die vorderen Griffstücke bilden.

10. Fahrradlenker (50, 100) mit einem Querträger (52, 102), der ein zentrales mit einer Lenksäule (30) verbindbares Teil besitzt, die vor einem Fahrradsitz (20) angeordnet ist, wobei der Querträger sich gegenüberliegende Teile besitzt, die sich in gewundene Teile (54, 104) und in Richtung vorderer Griffstücke (60, 106) erstrecken, die in einem Abstand voneinander angeordnet sind, der geringer ist als die Breite des Querträgers (52, 102), **dadurch gekennzeichnet**, daß die gewundenen Teile (54, 104) sich im wesentlichen nach vorne und nach innen zu den vorderen Griffstücken (60, 106) erstrecken, mit einem Paar nach innen sich verjüngenden Polstern (62, 110), die an den einander gegenüberliegenden Abschnitten des Querträgers (52, 102) befestigt sind, und die verjüngt sind, um die Unterarme (F) eines Fahrers nach innen zu zwingen, wenn die Hände des Fahrers nach vorne sich erstrecken, um die vorderen Griffstücke zu umgreifen.

11. Fahrradlenker nach Anspruch 10, **dadurch gekennzeichnet**, daß das Polsterpaar derart geformt ist, daß es dem Fahrer erlaubt, über es zu greifen, um damit zusätzliche Handstellungen für den Fahrer zu bilden.

12. Fahrradlenker nach Anspruch 10 oder 11, **dadurch gekennzeichnet**, daß das Polsterpaar nahe an dem zentralen Abschnitt des Querträgers (52, 102) anliegt, um eine Fahrerposition zu ergeben, in der die Ellbogen des Fahrers in einem geringeren Abstand als die Schulterbreite des Fahrers voneinander beabstandet sind, wenn die Unterarme des Fahrers auf dem Polsterpaar ruhen.

13. Fahrradlenker nach Anspruch 12, **dadurch gekennzeichnet**, daß die vorderen Griffstücke nach innen konvergieren und relativ dicht nebeneinander angeordnet sind, um es den Armen des Fahrers zu ermöglichen, sich relativ gerade nach vorne in Richtung auf die vorderen Griffstücke zu erstrecken, wenn diese auf dem Polsterpaar ruhen.

14. Fahrradlenker nach einem der Ansprüche 10 bis 13, **dadurch gekennzeichnet**, daß jede der gewundenen Teile (104) einen nach unten gerichteten Bogen aufweist, gefolgt von einem nach oben geneigten Bogen, dem nach vorne und nach innen gewundene Bögen folgen, die sich in die vorderen Griffstücke (106) erstrecken, wobei die nach unten geneigten und nach oben geneigten Bögen unterhalb der Ebene des Querträgers (102) angeordnet sind, und zusätzliche Handstellungen für den Fahrer bilden.

15. Adaptersatz (80) mit einer Lenkerverlängerungseinrichtung (84, 86, 88) zur Befestigung an einem Original-Fahrradlenker (81), der mit einer Lenksäule (30) verbunden ist, **dadurch gekennzeichnet**, daß die Lenkerverlängerungseinrichtung ein Paar Klemmen (84) für eine Verbindung des Original-Fahrradlenkers (81) an sich gegenüberliegenden Seiten der Lenksäule (30) aufweist, mit einem Verlängerungselement (86), das sich von jeder Klemme aus nach vorne und weg von dem Fahrer erstreckt, wobei jedes Verlängerungselement (86) einen Handbereich (88) besitzt, um eine Fahrerposition zu ergeben, in der die Ellbogen des Fahrers in der Nähe des Original-Lenkers angeordnet sind, wobei die Arme des Fahrers nach vorne in Richtung auf die vorderen Griffstücke (88) weisen.

16. Adaptersatz nach Anspruch 15, **dadurch gekennzeichnet**, daß die Verlängerungselemente (86) länglich ausgebildet sind und die Länge (C) von den Enden der Griffstücke bis zur Mitte des Original-Lenkers (81) im Bereich von 22,9-35,6 cm (9-14 inches) liegt.

17. Adaptersatz nach Anspruch 15 oder 16, **dadurch gekennzeichnet**, daß jeder der beiden Griffstücke (88) nach innen aufeinander zugewinkelt ist.

18. Adaptersatz nach Anspruch 17, **dadurch gekennzeichnet**, daß jeder der beiden Griffstücke (88) sowohl nach oben als auch nach innen abgewinkelt ist.

19. Adaptersatz nach einem der Ansprüche 15 bis 18, **dadurch gekennzeichnet**, daß ein Stützpolsterpaar (90) zur Befestigung an dem Original-Lenker auf jeder Seite von und nahe bei der Lenksäule zur Unterstützung der Unterarme des Fahrers vorgesehen ist.

20. Adaptersatz nach Anspruch 19, **dadurch gekennzeichnet**, daß jede der beiden Stützpolster im wesentlichen eine zylindrische Form mit einem Spalt besitzt, so daß es an dem Original-Lenker befestigbar ist, ohne daß irgendwelche Teile des Original-Lenkers entfernt werden müssen.

21. Adaptersatz nach einem der Ansprüche 15 bis 20, **dadurch gekennzeichnet**, daß die Verlängerungselemente (86) sich von ihren Klemmen (84) nach vorne auf Ihre freien Enden zu erstrecken, wobei die Verlängerungselemente (86) jeweils eine nach oben gerichtete Steigung an ihren freien Enden mit Griffstücken (88), die an der nach oben gerichteten Steigung befestigt sind, aufweisen.

22. Fahrradlenker (50, 81, 100) mit einem Querträger (52, 102), der ein zentrales mit einer Lenksäule (30) verbindbares Teil besitzt, die vor einem Fahrradsitz (20) angeordnet ist, wobei der Querträger außerdem Seitenteile besitzt, die sich zu ersten Teilen erstrecken, die zur Verwendung als ein erstes Paar Griffstücke (54, 104) geeignet sind, und die sich gegen nach vorne gerichtete zweite Teile erstrecken, die zur Verwendung als ein zweites Paar Griffstücke (60, 80, 106) geeignet sind, **dadurch gekennzeichnet**, daß die nach vorne gerichteten zweiten Teile in derartigen Positionen angeordnet sind, daß, wenn sie von den Händen eines Fahrers umgriffen werden, die Unterarme (F) des Fahrers durch die Seitenteile des Querträgers (52, 82, 102) abgestützt werden können.

## Revendications

1. Guidon (50 ; 100) de bicyclette comportant : une pièce transversale (52 ; 102) ayant une partie centrale pouvant être reliée à une colonne (30) de direction située en avant d'une selle (20) de bicyclette, la pièce transversale comportant aussi des parties latérales qui s'étendent jusqu'à des parties recourbées pouvant être utilisées en tant que première paire de poignées (54 ; 104) et s'étendent vers des parties avant pouvant être utilisées en tant que seconde paire de poignées (60 ; 106); caractérisé en ce que les parties recourbées (54; 104) de poignées comprennent des coudes tournés vers l'avant qui s'étendent vers l'avant, tout en convergeant vers l'intérieur, et les parties de poignées avant (60 ; 106) s'étendent depuis les coudes tournés vers l'avant et convergeant vers l'intérieur de manière à définir pour le cycliste plusieurs positions dans l'une desquelles les avant-bras (F) du cycliste convergent vers l'intérieur depuis les épaules du cycliste et reposent relativement près l'un de l'autre sur les parties s'étendant latéralement de la pièce transversale (52 ; 102), les mains du cycliste étant relativement proches l'une de l'autre tandis qu'elles tiennent la paire de parties de poignées avant.

2. Guidon de bicyclette selon la revendication 1, caractérisé en ce que les parties de poignées recourbées (104) comprennent des coudes inclinés vers le bas, s'étendant au-dessous de la pièce transversale (102), suivis de coudes inclinés vers le haut qui s'étendent jusque dans les coudes tournés vers l'avant et vers l'intérieur pour définir d'autres positions pour le cycliste.

3. Guidon de bicyclette selon la revendication 1 ou la revendication 2, caractérisé en ce que deux manchons s'étendent circonférentiellement autour des parties s'étendant latéralement afin de former une paire d'appuis (62 ; 110) pour avant-bras.

4. Guidon de bicyclette selon la revendication 3, caractérisé en ce que chacun des manchons comporte une partie élargie qui s'effile vers l'intérieur jusqu'à une partie plus petite, chacune des parties plus petites étant étroitement rapprochée de la partie centrale de la pièce transversale (52 ; 102) pouvant être reliée à la colonne de direction.

5. Guidon de bicyclette selon l'une quelconque des revendications précédentes, caractérisé en ce que les parties de poignées avant (60 ; 106) sont espacées, à leur distance la plus courte (T), d'un entraxe d'environ 10,2 cm (4") ou moins.

6. Guidon de bicyclette selon l'une quelconque des revendications précédentes, caractérisé en ce que les parties de poignées avant (60 ; 106) sont espacées en avant de la pièce transversale (52 ; 102), à leurs extrémités avant, d'une distance (L ; C) d'environ 30,5 cm (12") ou moins.

7. Guidon de bicyclette selon l'une quelconque des revendications précédentes, caractérisé en ce qu'une paire de mécanisme (55) de frein à main est placée sur les parties de poignées recourbées (54 ; 104) et comporte des leviers de frein (56) s'étendant à proximité immédiate des coudes.

8. Guidon de bicyclette selon l'une quelconque des revendications précédentes, caractérisé en ce que les parties de poignées avant (60 ; 106) sont également inclinées vers le haut pour définir des prises pour les mains, convergeant à la fois vers l'intérieur et vers le haut.

9. Guidon de bicyclette selon l'une quelconque des revendications précédentes, caractérisé en ce qu'une seule pièce continue de tube forme le guidon (50 ; 100), les extrémités libres du tube formant les parties de poignées avant.

10. Guidon (50 ; 100) de bicyclette comportant :

une pièce transversale (52 ; 102) ayant une partie centrale pouvant être reliée à une colonne de direction (30) située en avant d'une selle (20) de bicyclette, la pièce transversale ayant aussi des parties opposées qui s'étendent jusqu'à des parties recourbées (54 ; 104) et vers des parties de poignées avant (60 ; 106) espacées d'une distance inférieure à la largeur de la pièce transversale (52 ; 102) ;

caractérisé en ce que les parties recourbées (54; 104) s'étendent généralement vers l'avant et vers l'intérieur jusqu'aux parties de poignées avant (60 ; 106), deux manchons (62 ; 110), effilés vers l'intérieur, étant fixés sur les parties opposées de la pièce transversale (52 ; 102) et étant effilés de façon à solliciter les avant-bras (F) d'un cycliste vers l'intérieur lorsque les mains du cycliste s'étendent vers l'avant pour saisir les parties de poignées avant.

11. Guidon de bicyclette selon la revendication 10, caractérisé en ce que les deux manchons sont configurés pour permettre au cycliste de les saisir afin de former d'autres positions pour les mains du cycliste.

12. Guidon de bicyclette selon la revendication 10 ou la revendication 11, caractérisé en ce que les deux manchons sont étroitement adjacents à la partie centrale de la pièce transversale (52 ; 102) pour définir une position pour le cycliste dans laquelle les coudes du cycliste sont espacés d'une distance inférieure à la largeur aux épaules du cycliste lorsque les avant-bras du cycliste reposent sur les deux manchons.

13. Guidon de bicyclette selon la revendication 12, caractérisé en ce que les parties de poignées avant convergent vers l'intérieur et sont espacées de façon à être relativement proches l'une de l'autre pour permettre aux bras du cycliste, lorsqu'ils reposent sur les deux manchons de s'étendre relativement droit vers l'avant en direction des parties avant de poignées.

14. Guidon de bicyclette selon l'une quelconque des revendications 10 à 13, caractérisé en ce que chacune des parties recourbées (104) comprend un coude incliné vers le bas, suivi d'un coude incliné vers le haut, suivi de coudes tournés vers l'avant et vers l'intérieur qui s'étendent jusqu'aux parties de poignées avant (106), les coudes inclinés vers le bas et inclinés vers le haut étant situés au-dessous du plan de la pièce transversale (102) et formant des positions supplémentaires pour les mains du cycliste.

15. Kit d'adaptation (80) comportant :

des moyens (84, 86, 88) d'extension de guidon destinés à être fixés à un guidon d'origine (81) qui est relié a une colonne de direction (30) ;

caractérisé en ce que les moyens d'extension du guidon comprennent deux brides (84) destinées à engager le guidon d'origine (81) sur des côtés opposés de la colonne (30) de direction, un élément d'extension (86) faisant saillie vers l'avant de chaque bride et s'écartant du cycliste, et chaque élément d'extension (86) ayant une partie de poignée (88) disposée de façon à définir pour le cycliste une position dans laquelle les coudes du cycliste sont placés à proximité du guidon d'origine (81), les bras du cycliste s'étendant vers l'avant en direction des parties de poignées (88).

16. Kit d'adaptation selon la revendication 15, caractérisé en ce que les éléments d'extension (86) sont allongés et la longueur (C) allant des extrémités des parties de poignées (88) jusqu'au centre du guidon d'origine (81) est dans la plage de 22,9 a 35,6 cm (9 à 14").

17. Kit d'adaptation selon la revendication 15 ou la revendication 16, caractérisé en ce que les deux parties de poignées (88) sont inclinées l'une vers l'autre vers l'intérieur.

18. Kit d'adaptation selon la revendication 17, caractérisé en ce que les deux parties de poignées (88) sont inclinées vers le haut ainsi que vers l'intérieur.

19. Kit d'adaptation selon l'une quelconque des revendications 15 à 18, caractérisé en ce que deux manchons d'appui (90) sont prévus pour être montés sur le guidon d'origine de chaque côté et à proximité immédiate de la colonne de direction afin de supporter les avant-bras du cycliste.

20. Kit d'adaptation selon la revendication 19, caractérisé en ce que chacun des manchons d'appui (90) présente une forme globalement cylindrique avec une fente afin de pouvoir être monté sur le guidon d'origine sans qu'il soit nécessaire d'enlever des pièces quelconques du guidon d'origine.

21. Kit d'adaptation selon l'une quelconque des revendications 15 à 20, caractérisé en ce que les éléments d'extension (86) font saillie vers l'avant depuis leurs brides (84) vers des extrémités libres, chacun des éléments d'extension (86) comportant une partie inclinée vers le haut à son extrémité libre, des prises (88) pour les mains étant montées sur ladite partie inclinée vers le haut.

22. Guidon (50 ; 81 ; 100) de bicyclette comportant une pièce transversale (52 ; 82 ; 102) ayant une partie centrale pouvant être reliée à une colonne de direction (30) située en avant d'une selle (20) de bicyclette, la pièce transversale comportant aussi des parties latérales qui s'étendent jusqu'à des premières parties pouvant être utilisées en tant que première paire de poignées (54 ; 104) et s'étendent vers des secondes parties faisant saillie vers l'avant, pouvant être utilisées en tant que seconde paire de poignées (60 ; 80 ; 106), caractérisé en ce que les secondes parties faisant saillie vers l'avant sont situées dans des positions telles que, lorsqu'elles sont saisies par les mains d'un cycliste, les avant-bras (F) du cycliste puissent être supportés par les parties latérales de la pièce transversale (52 ; 82 ; 102).

Fig.1.

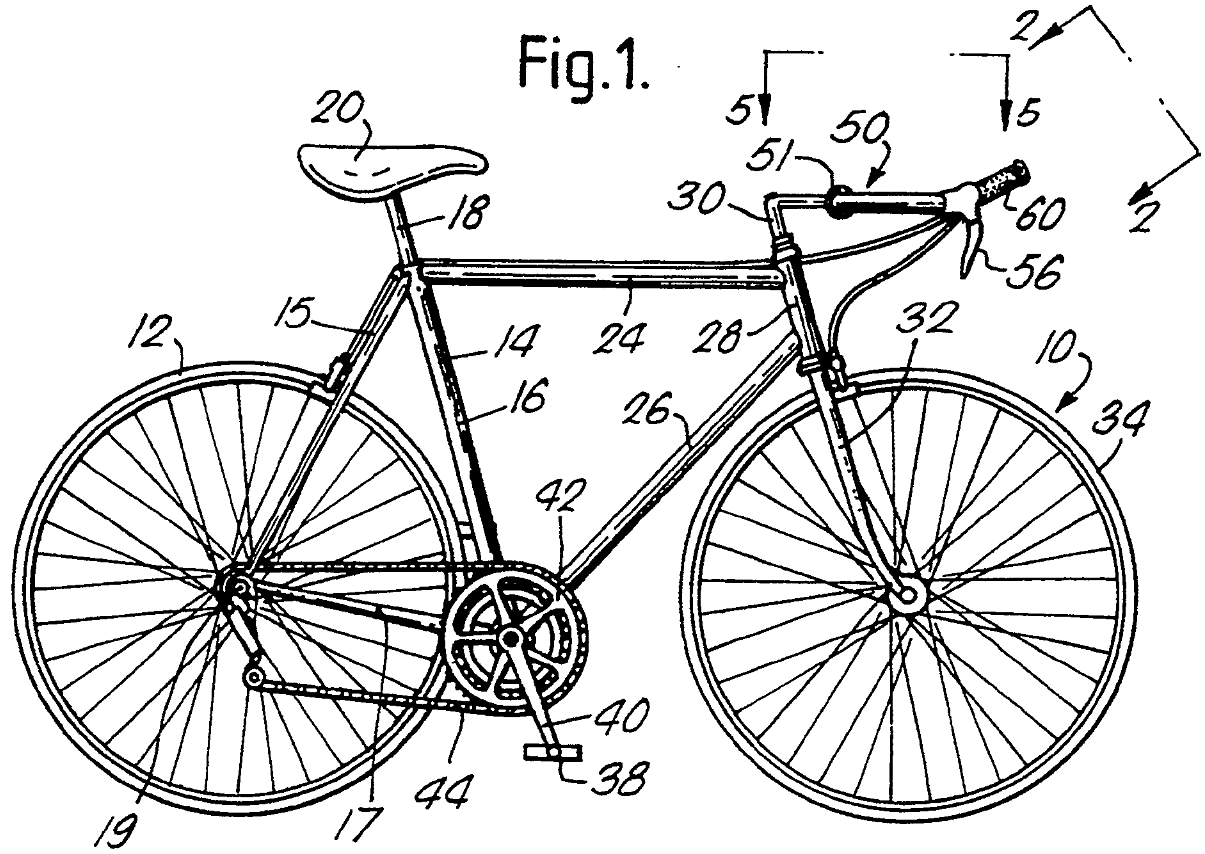


Fig.4.

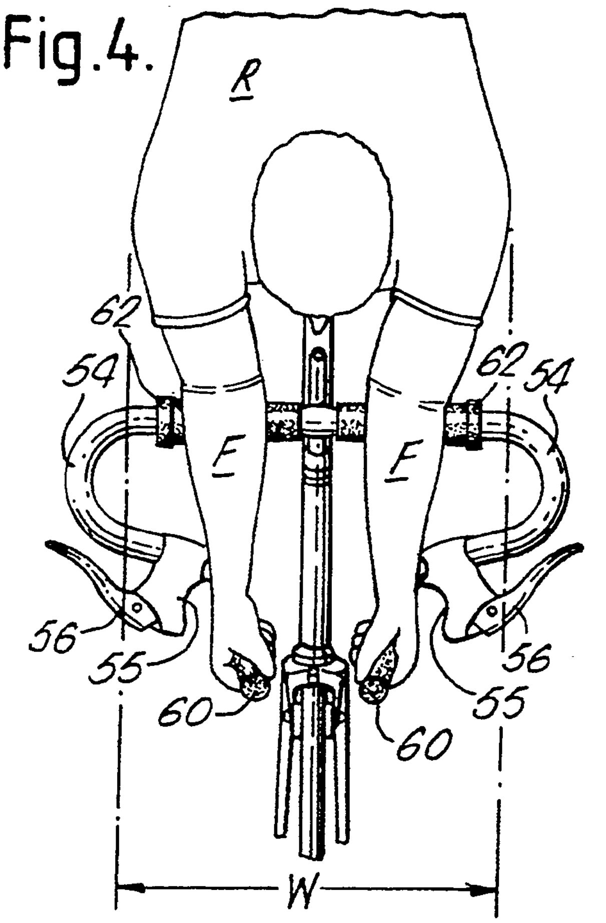


Fig. 2.

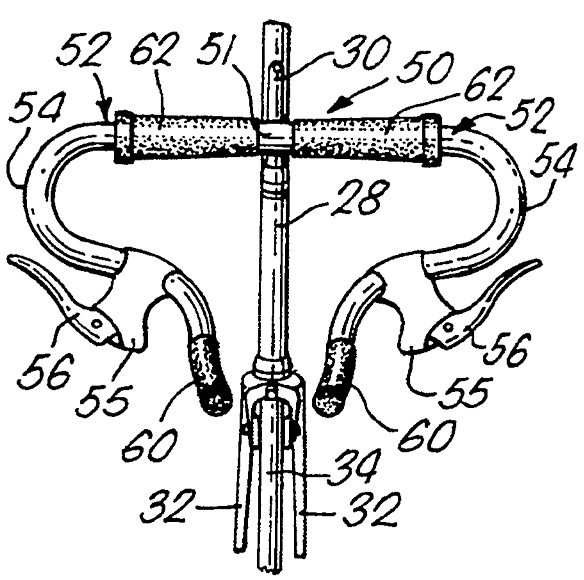

Fig.3.

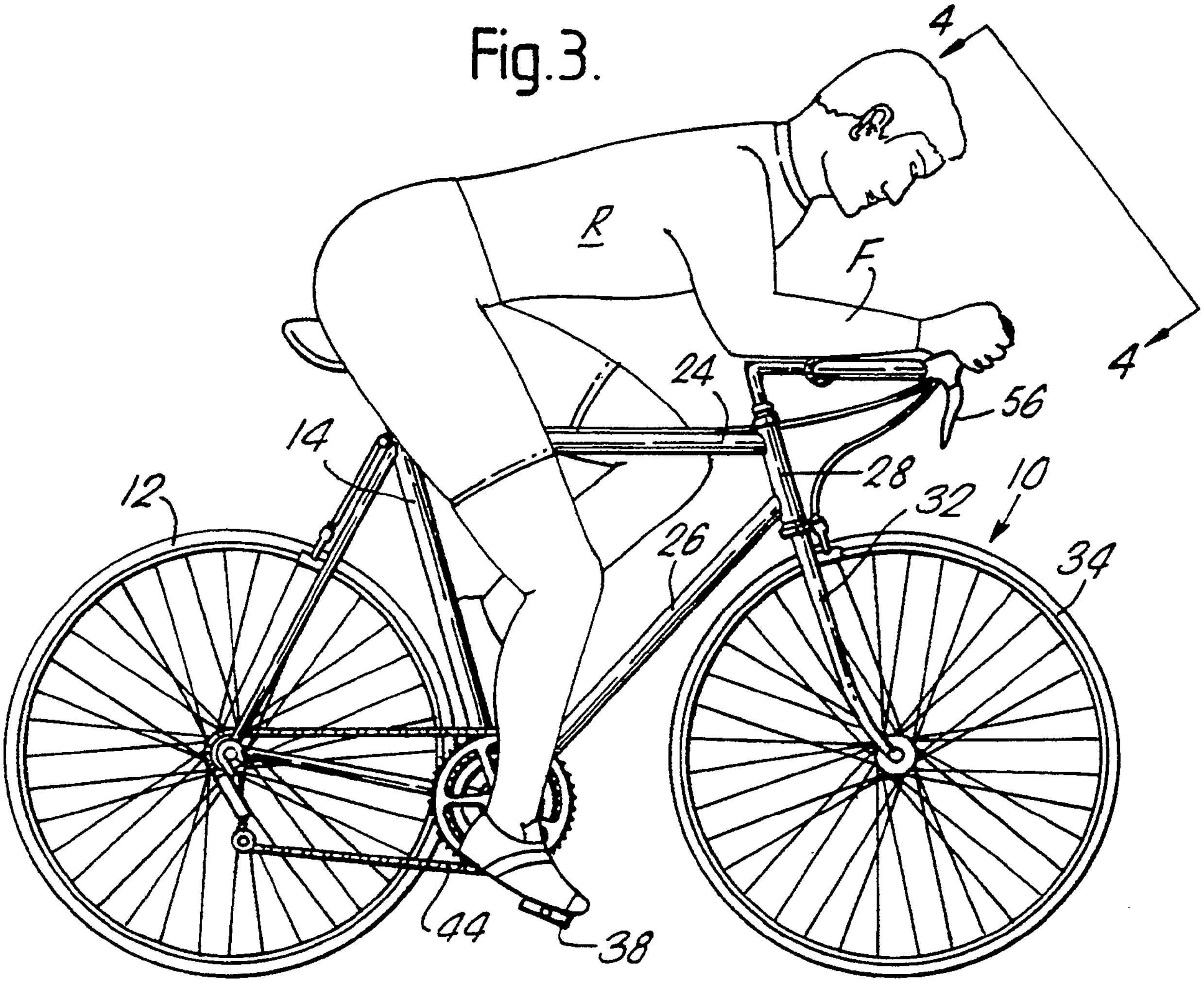


Fig.5.

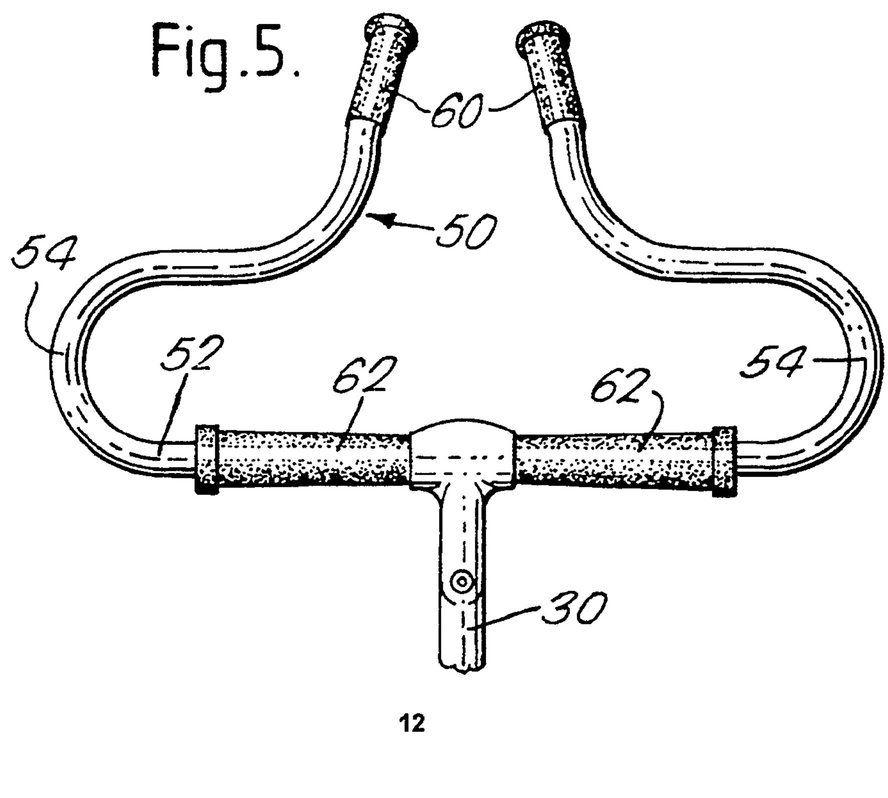

Fig.6.

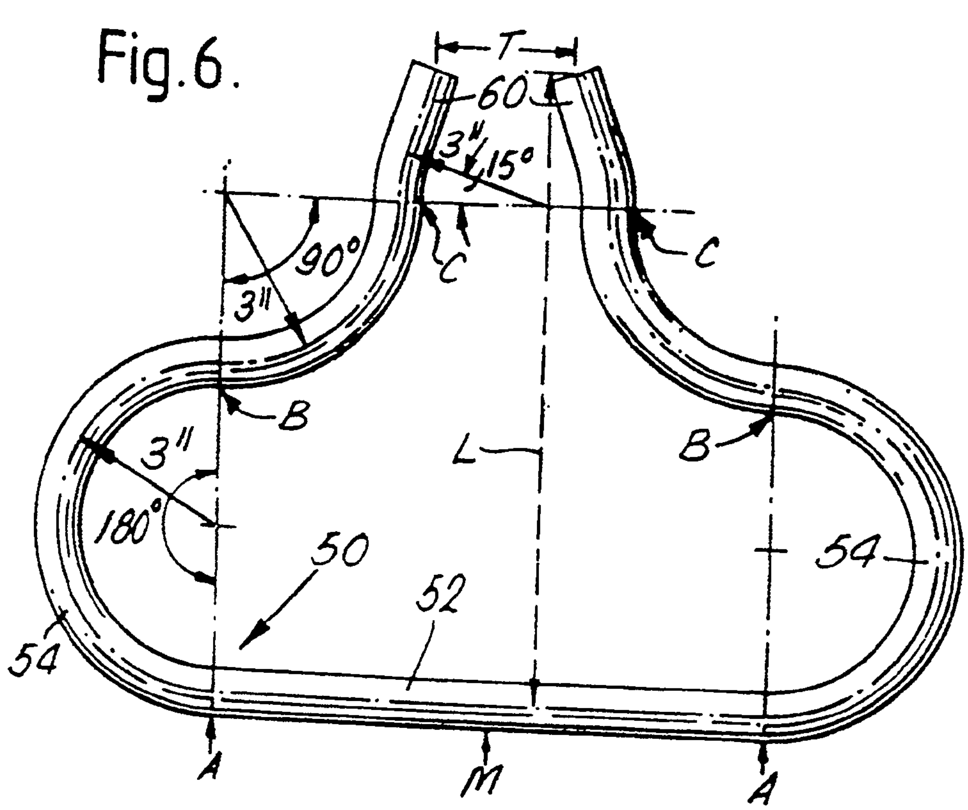


Fig.6A.

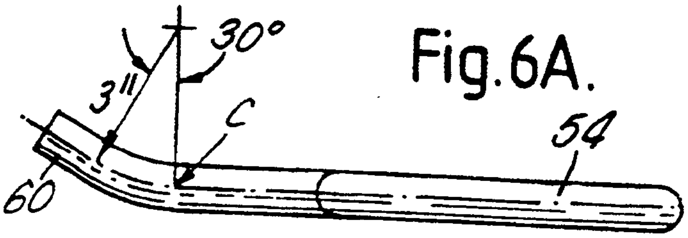


Fig.7.

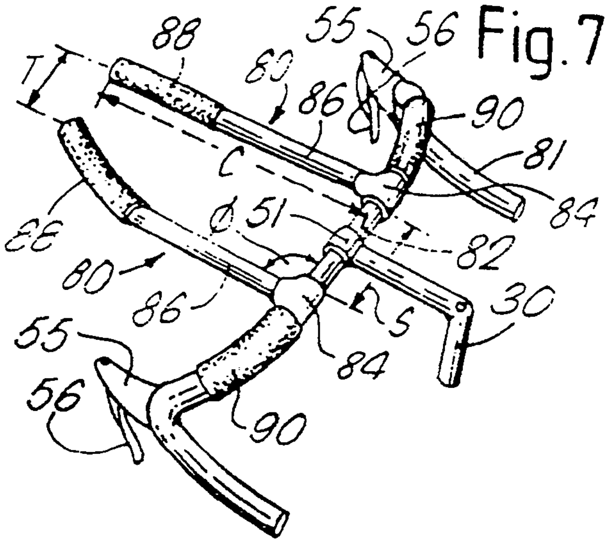


Fig.7A.

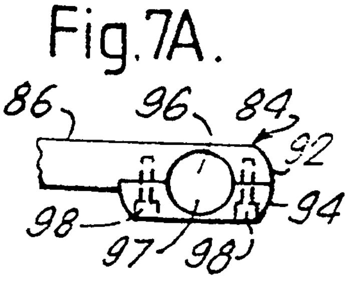

Fig. 8.

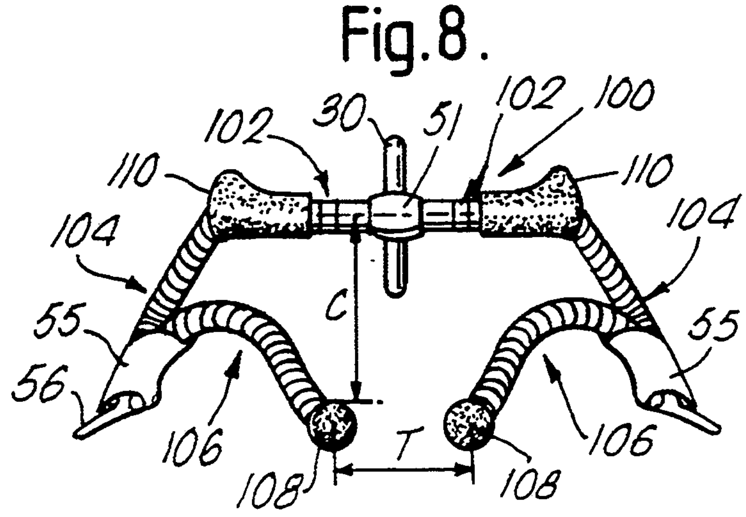


Fig. 9.

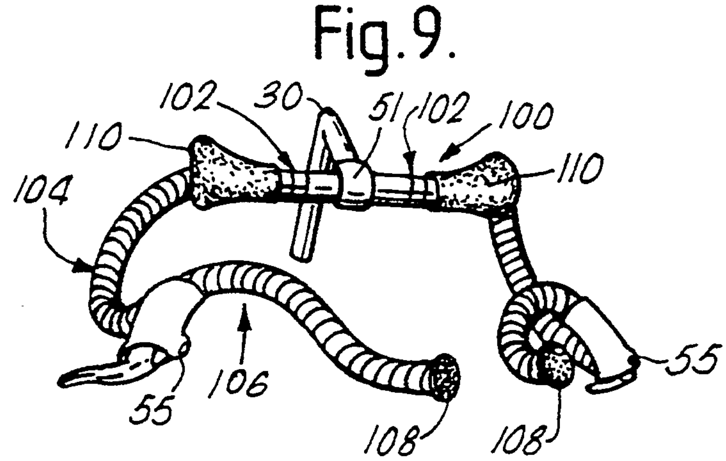


Fig. 10.

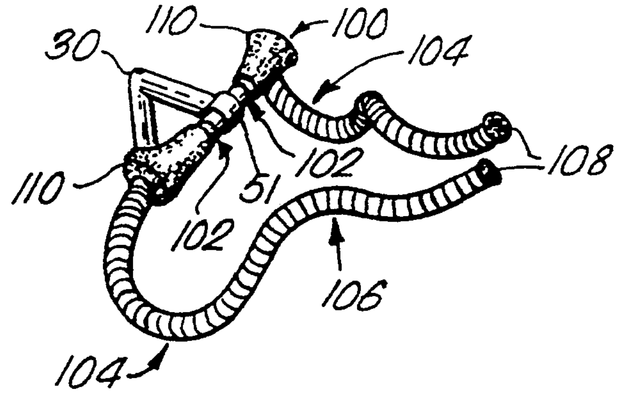

Fig.11A.

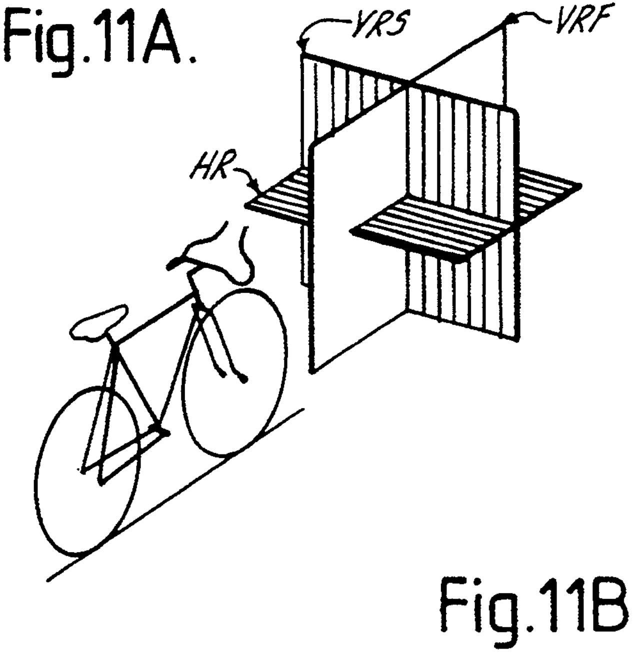


Fig.11B.

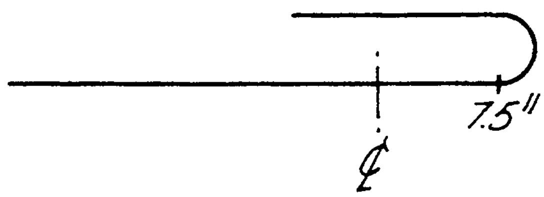


Fig.11C.

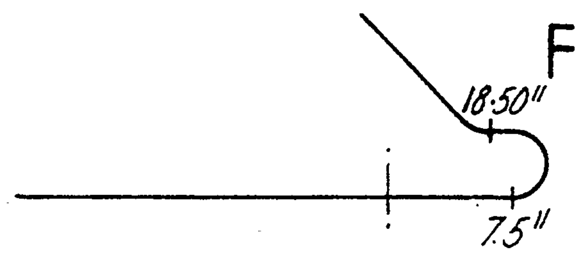


Fig.11D.

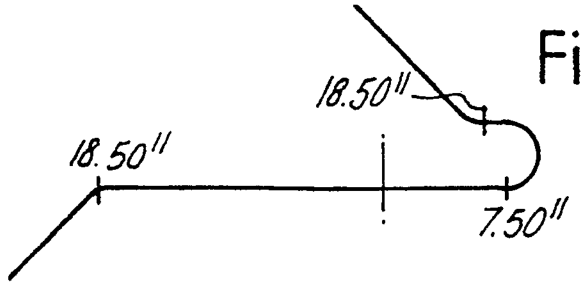


Fig.11E.

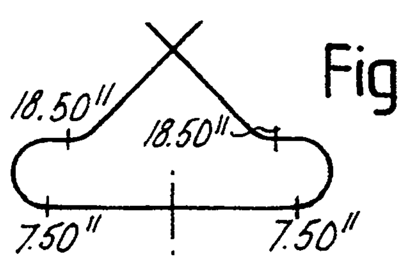

Fig.11F.

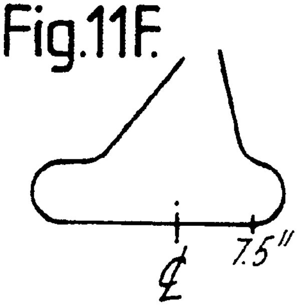


Fig.11G.

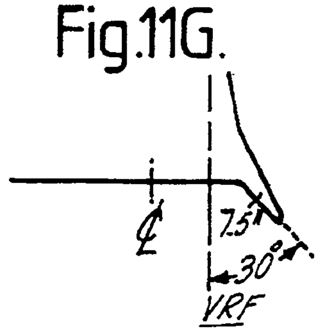


Fig.11H.

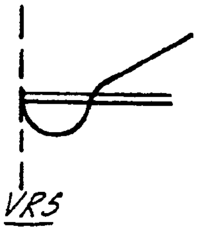


Fig.11I

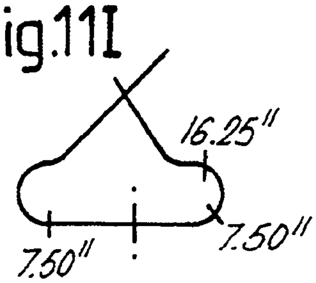


Fig.11J.

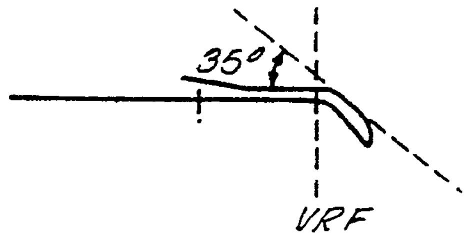


Fig.11K.

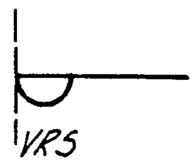


Fig.11L.

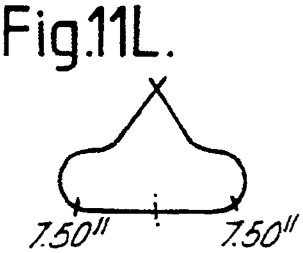


Fig.11M.

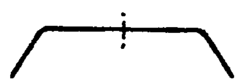

Fig.11N.

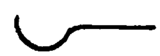

Fig.11O.

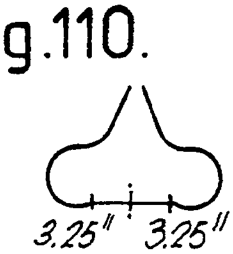


Fig.11P.

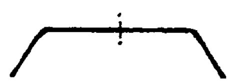

Fig.11Q.

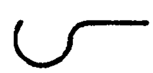

Fig.11R

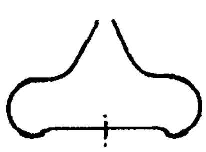

Fig.11S.

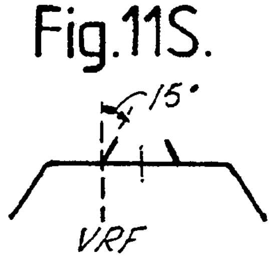


Fig.11T.